# EUROPÄISCHE PATENTSCHRIFT

(11) **EP 2 472 137 B1**
(45) Veröffentlichungstag und Bekanntmachung des Hinweises auf die Patenterteilung: **30.10.2019**
(21) Anmeldenummer: 11196276.7
(22) Anmeldetag: 30.12.2011
(51) Int. Cl.: F16F 1/368, F16F 1/12, F16F 3/02, F16F 1/26, F16F 1/02

(54) **Blattfederelement und Blattfederanordnung**
Leaf spring element and leaf spring assembly
Elément de ressort à lame et agencement de ressort à lame

(30) Priorität: 31.12.2010 DE 102010061649
(43) Veröffentlichungstag der Anmeldung: 04.07.2012
(73) Patentinhaber: DANTO Invention GmbH & Co. KG, 64589 Stockstadt am Rhein (DE)
(72) Erfinder: KELLER, Tobias, 67596 Dittelsheim-Hessloch (DE)
(74) Vertreter: Habermann Intellectual Property Partnerschaft von Patentanwälten mbB

(56) Entgegenhaltungen:
- WO-A1-87/00252
- WO-A1-2011/128042
- US-A- 3 873 077
- US-A- 4 927 124
- US-A1- 2009 200 721

## Beschreibung

Die Erfindung betrifft ein Blattfederelement mit mindestens zwei Blattfederabschnitten gemäß dem Oberbegriff des Patentanspruchs 8. Die Erfindung betrifft auch eine Blattfederanordnung mit mindestens zwei Blattfederelementen gemäß dem Oberbegriff des Patentanspruchs 8. Die Erfindung betrifft weiterhin auch eine Blattfederanordnung mit einer ersten Lagervorrichtung, mit einer zweiten Lagervorrichtung und mit einem Blattfederelement mit mindestens einem Blattfederabschnitt gemäß dem Oberbegriff des Patentanspruchs 1.

Blattfedern kommen häufig zur Federung von Nutzfahrzeugen zum Einsatz. Dabei soll die Federung gewährleisten, dass die Räder des Nutzfahrzeugs Fahrbahnunebenheiten folgen und dabei für eine möglichst kontinuierliche Bodenhaftung sorgen. Gleichzeitig sollen die Unebenheiten möglichst keine Auswirkungen auf die Karosserie, die Ladung und die Insassen des Fahrzeugs haben.

Blattfedern bestehen meistens aus einem flachen Metallband, das bogenförmig vorgespannt wird. Dabei werden üblicherweise mehrere Blätter mit verschiedenen Längen und Vorspannungen zu einem Blattfederpaket durch Federklemmen zusammengefasst. Auf diese Weise kann die Federkennlinie des Blattfederpakets an die jeweiligen Anforderungen angepasst werden. Solche Blattfederungen sind vergleichsweise kostengünstig herstellbar, weisen im Vergleich zu anderen Federungsvorrichtungen aber nur einen geringen Federungskomfort und eine lediglich eingeschränkte Verbesserung der Fahrsicherheit auf. Zudem ist für den Einsatz solcher Blattfederungen ein erheblicher Bauraum erforderlich.

Daher werden in Personenkraftwagen üblicherweise Schraubenfedern zur Federung des Fahrzeugs eingesetzt. Da sich die Anforderungen an die jeweilige Federkennlinie einer Federung von Fahrzeug zu Fahrzeug unterscheiden, ist für jeden Fahrzeugtyp die Herstellung eines entsprechend angepassten Satzes Schraubenfedern erforderlich. Daher ist der Herstellungsaufwand solcher Schraubenfedern im Vergleich zu den aus mehreren Blattfedern zusammengesetzten Blattfederpaketen erheblich höher.

Zudem werden Schraubenfedern üblicherweise aus Metall hergestellt und weisen daher ein vergleichsweise hohes Federgewicht auf. Ein höheres Eigengewicht der Federn hat einen negativen Einfluss auf das fahrdynamische Verhalten des Fahrzeugs zur Folge.

Des Weiteren sind aus der Druckschrift AT 28 924 E Federn bekannt, die aus mehreren über bogenförmige Federkraftbereiche miteinander verbundenen Federschenkeln bestehen. Bei diesen Federn treten die größten Belastungen in den bogenförmigen Federkraftbereichen auf, während die im Wesentlichen ebenen Federschenkel die auftretenden Kräfte auf die Federkraftbereiche übertragen. Durch die Länge der Federschenkel bzw. den Abstand zweier mittels eines Federschenkels verbundener Federkraftbereiche ist ein Hebelarm bestimmt, der einen Einfluss auf die Federkennlinie einer solchermaßen ausgestalteten Feder hat. Die Federkraftbereiche bestimmen maßgeblich die durch eine solche Feder aufbringbare Federkraft. Es hat sich gezeigt, dass auf Grund der erheblichen in den Federkraftbereichen auftretenden Belastungen bei einer Herstellung solcher Federn aus Metall, diese Federn bereits frühzeitig Ausfallen. Daher ist vorgeschlagen worden, solche Federn aus Faserverbundwerkstoffen herzustellen und die Federkraftbereiche gegebenenfalls durch Verstärkungselemente weiter zu stabilisieren. Eine solche Anordnung ist äußerst aufwendig und deren Herstellung kostenintensiv.

Darüber hinaus weisen Federn aus mehreren über bogenförmige Federkraftbereiche miteinander verbundenen Federschenkeln eine erhebliche Bauhöhe auf. Bei maximaler Belastung der Feder befinden sich die jeweiligen, unmittelbar übereinander angeordneten bogenförmigen Federkraftbereiche miteinander in Anschlag. Daher wird die Bauhöhe dieser Federn im Wesentlichen durch eine Anzahl und eine Höhe der in der Feder in Krafteinwirkungsrichtung übereinander angeordneten bogenförmigen Federkraftbereiche bestimmt.

In US 4,927,124 A ist eine derartige Federeinrichtung beschrieben, bei der ein Blattfederelement aus mehreren ebenen und parallel zueinander ausgerichteten Blattfederabschnitten zusammengesetzt ist, die jeweils über einen bogenförmig gekrümmten Federkraftbereich miteinander verbunden sind. Bei einer Belastung des Blattfederelements werden die einzelnen Blattfederabschnitte nicht nennenswert verformt, sondern lediglich die bogenförmig gekrümmten Federkraftbereiche verformt. Die jeweils einander gegenüberliegenden Endbereiche eines einzelnen Blattfederabschnitts sind nicht momentenfest gelagert. Die einzelnen Blattfederabschnitte tragen deshalb nicht zu einer Federwirkung des Blattfederelements bei, die ausschließlich durch eine Verformung in den gekrümmten Federkraftbereichen erzeugt werden kann.

Aufgabe der Erfindung ist daher andere Federelemente bereitzustellen, die einzeln oder in einem aus mehreren Federelementen bestehenden Federverbund zur Federung von Kraftfahrzeugen oder anderen Maschinen eingesetzt werden können, wobei die Federelemente kostengünstig herstellbar sein, einen vergleichsweise geringen Bauraum erfordern und vergleichsweise gute Federeigenschaften aufweisen sollen.

Diese Aufgabe wird erfindungsgemäß durch ein Blattfederelement mit den Merkmalen des Patentanspruchs 8 gelöst. Diese Aufgabe wird auch durch eine Blattfederanordnung mit den Merkmalen des Patentanspruchs 18 gelöst. Dieselbe Aufgabe wird auch durch eine Blattfederanordnung mit den Merkmalen des Patentanspruchs 1 gelöst. Weitere vorteilhafte Ausgestaltungen des Erfindungsgedankens sind Gegenstand der rückbezogenen Patentansprüche 2 bis 7 sowie 9 bis 20.

Bei einer momentenfesten Lagerung eines Bauteils in einem Lager werden in dem Lager auf das Bauteil wirkende Drehmomente auf das Lager bzw. auf weitere mit dem Lager verbundene gleichartige oder andersartige Bauteile oder dergleichen übertragen, so dass eine Verdrehung des gelagerten Bauteils in dem Lager ausgeschlossen ist, bzw. für die Federwirkung ohne Bedeutung ist.

Momentenfest gelagerte oder eingespannte Endbereiche der Blattfederabschnitte sind daher durch die Einwirkung einer Kraft auf das Blattfederelement nicht elastisch verformbar und weisen keinen nennenswerten Einfluss auf die Federwirkung des Blattfederabschnitts auf. Momentenfest gelagerte Endbereiche dienen vielmehr der Übertragung der abzufedernden Kräfte auf Bereiche der Blattfederabschnitte, die sich zwischen den Endbereichen befinden.

Da die in der ersten und zweiten Lagervorrichtung momentenfest gelagerten Endbereiche parallel verschiebbar und relativ zueinander auslenkbar sind, können die Bereiche der Blattfederabschnitte, die zwischen den Endbereichen angeordnet sind so ausgestaltet werden, dass diese Bereiche sich unter Krafteinwirkung elastisch verformen.

Während bei den aus dem Stand der Technik bekannten Federn mit bogenförmigen Federkraftbereichen die Federwirkung im Wesentlichen durch die elastisch verformbaren Federkraftbereiche aufgebracht wird, die auf gegenüberliegenden Seiten der einzelnen Federschenkel angeordnet sind und die Federschenkel miteinander verbinden, sind bei den erfindungsgemäßen Blattfederabschnitten die Bereiche zwischen den Endbereichen maßgeblich für die Federwirkung erforderlich.

Die jeweils momentenfest gelagerten gegenüberliegenden Endbereiche werden bei einer Krafteinleitung parallel verschoben und relativ zueinander ausgelenkt. Die Richtung der Parallelverschiebung entspricht dabei der Krafteinleitungsrichtung. Die relative Auslenkung der Endbereiche wird durch eine Längenänderung der durch Krafteinwirkung elastisch verformten Blattfederabschnitte hervorgerufen und weist daher in Ausdehnungsrichtung des Blattfederabschnitts. Alle weiteren Bewegungsmöglichkeiten sind zweckmäßigerweise ausgeschlossen.

Es ist auch möglich und zweckmäßigerweise vorgesehen, dass die erste und/oder zweite Lagervorrichtung verschiebungsfest mit dem jeweiligen Endbereich verbunden ist und parallel zu einem gegenüberliegenden und momentenfest gelagerten Endbereich verschiebbar und relativ zu dem gegenüberliegenden und momentenfest gelagerten Endbereich auslenkbar ist.

Um bei gleicher Bauhöhe einen vergleichsweise großen Federweg zu erreichen ist erfindungsgemäß vorgesehen, dass bei einem vorgebbaren Belastungsgrad des Blattfederelements die jeweiligen Endbereiche des mindestens einen Blattfederabschnitts im Wesentlichen in einer zu einer Krafteinleitungsrichtung orthogonalen Ebene liegen. In einem unbelasteten Zustand befinden sich die jeweiligen Endbereiche der Blattfederabschnitte bezüglich einer Krafteinleitungsrichtung in einem Abstand zueinander. Durch Belastung des Federelements werden die jeweiligen Endbereiche der einzelnen Blattfederabschnitte parallel zueinander verschoben, wobei sich der Abstand bezüglich der Krafteinleitungsrichtung der jeweiligen Endbereiche zueinander verringert.

Bei einer maximalen Belastung des Blattfederelements befinden sich die Endbereiche der einzelnen Blattfederabschnitte in einer zu der Krafteinleitungsrichtung im Wesentlichen orthogonalen Ebene, das heißt die jeweiligen sich gegenüberliegenden Endbereiche der einzelnen Blattfederabschnitte weisen in Bezug auf die Krafteinleitungsrichtung keinen beziehungsweise nur einen geringen Abstand zueinander auf. Die einzelnen Blattfederabschnitte sind dabei erfindungsgemäß so ausgestaltet, dass sie sich bei dieser maximalen Belastung näherungsweise in eine Gerade beziehungsweise ebene Form verformen. Dies kann beispielsweise durch S-förmig ausgestaltete Blattfederabschnitte erreicht werden.

Werden mindestens zwei Blattfederabschnitte beispielsweise in einer Krafteinleitungsrichtung übereinander angeordnet und momentenfest miteinander verbunden, liegen bei maximaler Belastung die einzelnen Endbereiche unterschiedlicher Blattfederabschnitte aufeinander auf und die jeweiligen sich gegenüberliegenden Endbereiche der einzelnen Blattfederabschnitte weisen in Bezug auf die Krafteinleitungsrichtung keinen beziehungsweise nur einen geringen Abstand zueinander auf, so dass eine sehr geringe Höhe des gesamten Blattfederelements im belasteten Zustand erreicht wird. Dadurch ist der nutzbare Federweg vergleichsweise groß.

Idealerweise bestimmt sich die Bauraumhöhe in einem vollständig eingefederten Zustand der mehreren in Krafteinleitungsrichtung übereinander angeordneten Blattfederabschnitten durch eine Dicke der einzelnen Blattfederabschnitte und die Anzahl der eng aufeinanderliegenden Blattfederabschnitte.

Im Gegensatz dazu wird bei den aus dem Stand der Technik bekannten Federn, bei denen die Federwirkung in den bogenförmigen Federkraftbereichen erzeugt wird, die minimale Bauraumhöhe durch die Höhe der bogenförmigen Federkraftbereiche vorgegeben. Im maximal eingefederten Zustand befinden sich die jeweiligen, unmittelbar übereinander angeordneten bogenförmigen Federkraftbereiche miteinander in Anschlag. Die Bauhöhe dieser Federn ist durch die Anzahl und die Höhe der in der Feder in Krafteinwirkungsrichtung übereinander angeordneten bogenförmigen Federkraftbereiche bestimmt. Die Höhe der bogenförmigen Federkraftbereiche wird durch die in Federkraftbereichen aufzunehmende und abzufedernde Krafteinwirkung und das Federmaterial bestimmt.

Dies kann auf besonders vorteilhafte Weise erfindungsgemäß dadurch erreicht werden, dass der Blattfederabschnitt eine S-förmige Kontur aufweist. Ein Blattfederabschnitt weist eine S-förmige Kontur auf, wenn ein Querschnitt längs einer die gegenüberliegenden Endbereiche des Blattfederabschnitts verbindenden Achse durch den Blattfederabschnitt S-förmig ausgestaltet ist. Während die im Wesentlichen ebenen und parallel zueinander ausgerichteten Endbereiche eines S-förmigen Blattfederabschnitts momentenfest gelagert oder momentenfest in der ersten oder zweiten Lagervorrichtung festgelegt sind, kann ein geschwungener Bereich zwischen den Endbereichen elastisch verformt werden. Die maximal mögliche elastische Verformung eines S-förmigen Blattfederabschnitts ist erreicht, sobald momentenfest gelagerte und in Krafteinleitungsrichtung unmittelbar übereinander angeordnete Endbereiche in Anschlag sind und der in einem unbelasteten Zustand S-förmig geschwungene Bereich zwischen den Endbereichen im Wesentlichen eine ebene Form bzw. eine im Wesentlichen gerade Kontur aufweist.

Um sehr einfach und kostengünstig Federn mit unterschiedlichen Federkennlinien und an die entsprechenden Anforderungen angepassten Federwegen herstellen zu können, ist erfindungsgemäß weiter vorgesehen, dass das Blattfederelement mindestens zwei Blattfederabschnitte aufweist.

Optional ist vorgesehen, dass einander zugeordnete Endbereiche zweier benachbarter Blattfederabschnitte momentenfest verbunden sind.

Beispielsweise können bei einem Blattfederelement mehrere Blattfederabschnitte um eine gemeinsame Achse übereinander angeordnet sein, wobei die einzelnen Blattfederabschnitte in jeweiligen einander zugeordneten Endbereichen der einzelnen Blattfederabschnitte momentenfest miteinander verbunden sind. Die einzelnen momentenfest miteinander verbundenen Blattfederabschnitte stellen dabei eine Wirkverbindung der beiden am weitesten voneinander entfernt angeordneten Blattfederabschnitte dar. Die momentenfest verbundenen Endbereiche sind dabei zweckmäßigerweise auch verschiebungsfest miteinander verbunden, so dass eine relative Auslenkung der verbundenen Endbereiche im Wesentlich ausgeschlossen ist. Die Krafteinleitung in die einzelnen Blattfederabschnitte erfolgt dabei über die Lagervorrichtungen die an den Endbereichen der beiden am weitesten voneinander entfernt angeordneten Blattfederabschnitten angeordnet sind. Auf diese Weise kann ein Blattfederelement kostengünstig aus mehreren Blattfederabschnitten hergestellt werden. Dabei können die gewünschten Federeigenschaften durch den modularen Federaufbau sehr einfach bei der Herstellung berücksichtigt werden. Solche Blattfederelemente eignen sich beispielsweise zur Federung von Fahrzeugen und Maschinen.

Zur weiteren Vereinfachung der Herstellung von Federn mit unterschiedlichen Federkennlinien und Federwegen ist weiter vorgesehen, dass einander zugeordnete Endbereiche zweier benachbarter Blattfederabschnitte in einer Befestigungsvorrichtung momentenfest festgelegt sind. Auf diese Weise können einfach einzelne Blattfederabschnitte beispielsweise aus einem Faserverbundmaterial hergestellt werden und anschließend mit Hilfe der Befestigungsvorrichtung zu einem Blattfederelement verbunden werden. Die Federrate und der Federweg kann durch die Wahl geeigneter Blattfederabschnitte und die Anzahl der für ein Blattfederelement verwendeten Blattfederabschnitte einfach auf Grund des modularen Aufbaus variiert werden. So sind Blattfederelemente unterschiedlichster Eigenschaften für verschiedene Anwendungsfälle einfach und kostengünstig herstellbar.

Es ist ebenfalls denkbar und für einige Anwendungen zweckmäßig, dass ein Endbereich mindestens eines Blattfederabschnitts gelenkig mit einem Endbereich eines benachbarten Blattfederabschnitts verbunden ist und den gelenkig verbundenen Endbereichen gegenüberliegende Endbereiche mit einem weiteren Blattfederabschnitt oder einer Lagervorrichtung momentenfest verbunden sind. Die einzelnen Blattfederabschnitte könnten beispielsweise bogenförmig ausgestaltet sein. Dadurch kann erreicht werden, dass sich die Endbereiche der Blattfederabschnitte in einem belasteten Zustand aufeinander ablegen und das Blattfederelement so eine vergleichsweise geringe Höhe in einem eingefederten Zustand aufweist. Bei gegebener Einbauhöhe wird auf diese Weise der nutzbare Federweg vergrößert. Um eine ausreichende Federlebensdauer sicherstellen zu können ist bei der Auswahl der Gelenke insbesondere auf eine entsprechende Verschleißfestigkeit zu achten.

Zweckmäßigerweise weisen gelenkig verbundene Blattfederabschnitte zueinander symmetrische Konturen auf. Beispielsweise können zwei gelenkig verbundene und in Krafteinleitungsrichtung übereinander angeordnete Blattfederabschnitte zusammen betrachtet eine Parabelform aufweisen, wobei die Kontur jedes Blattfederabschnitts eine parabelastförmige bzw. halbparabelförmige Kontur aufweist.

Zweckmäßigerweise ist weiter vorgesehen, dass die erste Lagervorrichtung gelenkig mit einem Krafteinleitungselement verbindbar ist und/oder die zweite Lagervorrichtung gelenkig mit einer Kraftaufnahmevorrichtung verbindbar ist.

Um den Herstellungsaufwand insbesondere bei der Herstellung einer Vielzahl gleichartiger Blattfederelemente zu reduzieren ist vorteilhafterweise vorgesehen, dass das Blattfederelement einteilig ausgestaltet ist und mindestens zwei Blattfederabschnitte aufweist. Auf diese Weise ist es möglich, eine Produktion auf die Herstellung kompletter Blattfederelemente einzustellen und mit Hilfe entsprechend eingerichteter Maschinen eine Vielzahl gleichartiger Blattfederelemente schnell und kostengünstig herzustellen.

Zur Herstellung möglichst leichter und vergleichsweise kostengünstiger Blattfederelemente ist erfindungsgemäß weiter vorgesehen, dass der mindestens eine Blattfederabschnitt aus einem Faserverbundwerkstoff hergestellt ist und Fasern des Faserverbundwerkstoffs im Wesentlichen unidirektional angeordnet sind. Beispielsweise können die Blattfederabschnitte aus unidrektionalen vorimprägnierten Fasern, sogenannten Prepregs, mit duroplastischer oder thermoplastischer Matrix im Pressverfahren hergestellt werden. Als Faserwerkstoffe können unter anderem Kohle,- Glas,- Basalt- oder Aramidfasern eingesetzt werden. Der Einsatz von Faserverbundwerkstoffen zur Herstellung der Blattfederabschnitte erleichtert zudem die Herstellung der gewünschten Form wie beispielsweise S-förmiger Blattfederabschnitte.

Vorteilhafterweise ist weiter vorgesehen, dass mindestens ein Blattfederabschnitt in einem Bereich zwischen den beiden Endbereichen eine sich längs des Blattfederabschnitts verändernde Dicke aufweist und die Dicke des Blattfederabschnitts so an einen Schnittkraftverlauf angepasst ist, dass in Randschichten des Blattfederabschnitts auftretende Zug-Druck-Spannungen im Wesentlichen konstant sind.. Als Randschichten werden die äußeren Materialschichten der Blattfederabschnitte bezeichnet. Werden die Blattfederabschnitte aus einem Faserverbundwerkstoff hergestellt, so kann als Randschicht eine äußere Faserschicht angesehen werden. Diese Randschichten weisen im Vergleich zu einer Dicke der Blattfederabschnitte eine nur geringe Dicke auf.

Im Sinne des Leichtbaugedankens bzw. um bei gleichen Federeigenschaften möglichst leichte Blattfederabschnitte herstellen zu können ist stets die optimale Ausnutzung aller Bauteilbereiche anzustreben. Bei gegebener Maximalbeanspruchung beispielsweise in Form einer maximalen Randschichtspannung sollte diese im gesamten Bauteil, bei gegebener äußerer Belastung, möglichst konstant auftreten.

Mit den gegebenen Randbedingungen und Parametern ist es einem Fachmann mit den bekannten Hilfsmitteln wie beispielsweise einer auf ein entsprechendes Finite-Elemente-Modell gestützten Optimierung ohne weiteres möglich, die Dicke des Blattfederabschnitts so an einen Schnittkraftverlauf anzupassen, dass in Randschichten des Blattfederabschnitts auftretende Zug-Druck-Spannungen im Wesentlichen konstant sind.

Werden zur Herstellung der Blattfederabschnitte Faserverbundwerkstoffe mit unidirektional angeordneten Fasern eingesetzt, so kann die Dicke eines Blattfederabschnitts einfach dadurch verändert werden, dass in einem Bereich größerer Dicke die einzelnen Fasern übereinander angeordnet werden und in einem Bereich geringerer Dicke die einzelnen Fasern nebeneinander angeordnet werden. Auf diese Weise ist die Herstellung eines entsprechend profilierten Blattfederabschnitts sehr einfach und kostengünstig möglich.

Es ist aber auch möglich und zweckmäßigerweise vorgesehen die einzelnen Blattfederabschnitte an die jeweiligen in den Blattfederabschnitten auftretenden Zug- bzw. Druckspannungen durch eine sich zwischen den Endbereichen verändernde Dicke der Blattfederabschnitte anzupassen.

Eine möglichst gleichmäßige Belastung der Randschichten des Blattfederabschnitts kann erfindungsgemäß dadurch erreicht werden, dass jeweils gegenüberliegende Randschichten eines Blattfederteilabschnitts parabelförmig ausgestaltet sind. Werden beispielsweise in einem unbelasteten Zustand S-förmig ausgestaltete Blattfederabschnitte eingesetzt, so könnte ein rechter Blattfederteilabschnitt des S-förmigen Blattfederabschnitts nach rechts geöffnete parabelförmige Randschichten aufweisen und ein linker Blattfederteilabschnitt des S-förmigen Blattfederabschnitts parabelförmig nach links geöffnete Randschichten aufweisen.

Näherungsweise bzw. bei Vernachlässigung von Effekten mit untergeordneter Bedeutung folgt die mathematisch optimale Kontur eines Kragträgers bzw. einer einseitig eingespannten ebenen Blattfeder unter Querkraftbelastung einer Parabel (streng genommen eigentlich der Umkehrfunktion einer Parabel). Die zweiseitig momentenfest gelagerten Blattfederabschnitte können als zwei einseitig eingespannte Blattfedern betrachtet werden, so dass für eine theoretische Betrachtung eine Beschränkung auf einseitig eingespannte ebene Blattfedern ausreichend und zweckmäßig ist. Die optimale parabelförmige Kontur kann auf mathematischem Wege folgendermaßen hergeleitet werden:
Eine Randschichtbiegespannung σ_{b} eines Biegebalkens lässt sich berechnen aus einem lokal wirksamen Biegemoment M_{b}, welches einen linear abfallenden Verlauf von einer Einspannstelle zu einem Kraftangriffspunkt aufweist, und einem Biegewiderstandsmoment W_{b}: σ_{b} = M_{b} / W_{b}.

Das Biegewiderstandsmoment W_{b} setzt sich zusammen aus einer Breite des Kragträgers bzw. der einseitig eingespannten Blattfeder b und der zugehörigen Dicke h: W_{b} = (b^{∗}h²) / 6.

Somit folgt für die Randschichtspannung: σ_{b} = M_{b} / ((b^{∗}h²) / 6) oder σ_{b} = (6^{∗}M_{b}) / (b^{∗}h²).

Da das Biegemoment M_{b} einen bekannten linearen Verlauf aufweist und σ_{b} konstant sein soll, lässt sich diese Gleichung nach h umstellen zu: h = ((6^{∗}M_{b}) / (b^{∗}σ_{b}))^{1/2}.

Hier wird ersichtlich, dass ein Verlauf der Dicke eigentlich der Umkehrfunktion einer Parabel folgt. Man spricht allerdings in diesen Fällen stets von einer sogenannten Parabelfeder.

Die beiden Blattfederteilabschnitte des Blattfederabschnitts sollten daher zweckmäßigerweise jeweils eine parabelförmige Kontur aufweisen, wobei Scheitelpunkte der jeweiligen parabelförmigen Konturen benachbart zueinander angeordnet sind.

Um die einzelnen Blattfederabschnitte möglichst einfach und kostengünstig herstellen zu können ist zweckmäßigerweise weiter vorgesehen, dass mindestens ein Blattfederabschnitt in einem Bereich zwischen den beiden Endbereichen eine sich längs des Blattfederabschnitts verändernde Breite aufweist. Werden zur Herstellung der einzelnen Blattfederabschnitte beispielsweise Faserverbundwerkstoffe mit unidirektional angeordneten Fasern eingesetzt, so können die einzelnen Fasern in einem Bereich des Blattfederabschnitts im Wesentlichen übereinander angeordnet sein und in einem anderen Bereich im Wesentlichen nebeneinander angeordnet sein. Auf diese Weise können die Federeigenschaften der einzelnen Blattfederabschnitte sehr einfach an die gewünschten Federeigenschaften angepasst werden.

Der Einfluss des sich verlängernden Hebelarms der eingeleiteten Kraft auf den jeweiligen Blattfederabschnitt bei einem Einfedern kann dadurch beeinflusst werden, dass mindestens ein Endbereich eine Blattfederabschnittabstützeinrichtung zur Beeinflussung der Blattfederabschnittfederkennlinie aufweist. Beim Einfedern wird ein Randbereich des entsprechenden Blattfederabschnitts auf der Blattfederabschnittabstützeinrichtung aufgelegt, so dass der Hebelarm entsprechend verkürzt und dadurch die Blattfederabschnittfederkennlinie beeinflusst wird. Durch eine entsprechende Ausgestaltung der Blattfederabschnittabstützeinrichtung kann die Federkennlinie einen degressiven, linearen oder progressiven Verlauf aufweisen.

Die Erfindung betrifft auch eine Blattfederanordnung mit mindestens zwei Blattfederelementen wie sie vorangehend beschriebenen werden. Der für den Einbau eines einzelnen an die jeweiligen Anforderungen angepassten Blattfederelements benötigte Bauraum kann dadurch an die gegebenen Bedingungen angepasst werden, dass mehrere Blattfederelemente bezüglich einer Krafteinleitungsrichtung im Wesentlichen parallel zueinander angeordnet werden. Zu diesem Zweck ist vorteilhafterweise vorgesehen, dass ein Krafteinleitungselement mit jeweils der ersten Lagervorrichtung der mindestens zwei Blattfederelemente verbindbar ist und eine Kraftaufnahmeeinrichtung mit jeweils der zweiten Lagervorrichtung der mindestens zwei Blattfederelemente verbindbar ist, so dass die Blattfederelemente im Wesentlichen konzentrisch um eine Krafteinleitungsachse angeordnet und in Richtung der Krafteinleitungsachse auslenkbar sind. Die einzelnen Blattfederelemente können beispielsweise auch um ein Dämpferbein angeordnet sein und so zusammen mit dem Dämpferbein ein Federbein bilden. Der für eine solche Blattfederanordnung benötigte Bauraum ist vergleichbar mit dem für ein gängiges mit einer Schraubenfeder aufgebauten Federbein, weist aber einen größeren Federweg, ein geringeres Gewicht und vergleichsweise geringere Herstellungskosten auf. Durch das geringe Gewicht solcher Blattfederanordnungen kann auch ein fahrdynamisches Verhalten eines Kraftfahrzeugs oder die entsprechende Dynamik einer Maschine verbessert werden.

Damit die einzelnen Blattfederabschnitte der mehreren Blattfederelemente bei einer Krafteinleitung im Wesentlichen in der Krafteinleitungsrichtung ausgelenkt werden, ist erfindungsgemäß weiter vorgesehen, dass mindestens ein Endbereich eines ersten Blattfederelements mit einem Endbereich eines zweiten Blattfederelements durch eine Stabilisierungsvorrichtung verbindbar ist, wobei die verbindbaren Endbereiche im Wesentlichen in einer bezüglich der Krafteinleitungsrichtung orthogonalen Ebene liegen. Durch die Verbindung der Endbereiche einzelner Blattfederabschnitte verschiedener Blattfederelemente werden die einzelnen Blattfederelemente zu einer im Wesentlichen gleichförmigen Bewegung beziehungsweise Auslenkung bei einer Belastung gezwungen. Insbesondere bei mehreren konzentrisch um die Krafteinleitungsrichtung angeordneten Blattfederelementen wird auf diese Weise sichergestellt, dass die einzelnen Blattfederabschnitte im Wesentlichen in Krafteinleitungsrichtung ausgelenkt werden. Dadurch wird ein Ausbrechen einzelner Blattfederelemente in eine Richtung verhindert, die nicht der Krafteinleitungsrichtung entspricht. Zweckmäßigerweise ist die Stabilisierungsvorrichtung besonders steif ausgeführt, um die einzelnen miteinander verbundenen Blattfederelemente besonders wirkungsvoll stabilisieren zu können.

Die Blattfederanordnungen können einfach dadurch an verschiedene Anforderungen angepasst werden, dass mindestens zwei Blattfederelemente unterschiedliche Federraten aufweisen. Auf diese Weise können beispielsweise Bereiche der Blattfederanordnung, in denen üblicherweise größere Federkräfte aufgebracht werden müssen als in anderen Bereichen der Blattfederanordnung, mit einem entsprechend versteiften Blattfederelement ausgestattet werden.

Nachfolgend werden Ausführungsbeispiele des Erfindungsgedankens näher erläutert, die in der Zeichnung dargestellt sind.

Es zeigt:
Fig. 1a eine schematische Darstellung eines momentenfest festgelegten Blattfederabschnitts in einem unbelasteten Zustand,
Fig. 1b den in Fig. 1a gezeigten Blattfederabschnitt in einem belasteten Zustand,
Fig. 2a eine schematische Darstellung zweier durch eine Befestigungsvorrichtung momentenfest verbundener Blattfederabschnitte,
Fig. 2b eine schematische Darstellung eines einteilig hergestellten Blattfederelements mit zwei Blattfederabschnitten,
Fig. 3a eine schematisch dargestellte Ansicht eines belasteten Blattfederabschnitts, der eine sich längs des Blattfederabschnitts verändernde Dicke und Breite aufweist.
Fig. 3b eine schematische Seitenansicht des in Fig. 3a dargestellten Blattfederabschnitts,
Fig. 3c eine schematische Darstellung eines Faserverlaufs des aus einem Faserverbundwerkstoff hergestellten und in Fig. 3b dargestellten Blattfederabschnitts,
Fig. 4a eine schematische Darstellung eines einteilig hergestellten momentenfest gelagerten Blattfederelements im unbelasteten Zustand,
Fig. 4b das in Fig. 4a dargestellte Blattfederelement in einem belasteten Zustand,
Fig. 5 eine schematische Darstellung eines Blattfederelements mit gelenkig verbundenen Blattfederabschnitten,
Fig. 6a eine schematisch dargestellte Aufsicht auf eine Blattfederanordnung bestehend aus sechs konzentrisch um eine Krafteinleitungsachse angeordnete Blattfederelementen,
Fig. 6b eine schematische Ansicht der in Fig. 6a dargestellten Blattfederanordnung,
Fig. 6c eine schematische Darstellung der in Fig. 6a und Fig. 6b dargestellten Blattfederanordnung,
Fig. 7a eine schematische Darstellung einer Aufsicht auf eine Blattfederanordnung ohne Kraftaufnahmeeinrichtung,
Fig. 7b eine schematische Darstellung der in Fig. 7a dargestellten Blattfederanordnung in einem eingefederten Zustand,
Fig. 7c eine schematische Darstellung der in Fig. 7b dargestellten Blattfederanordnung.

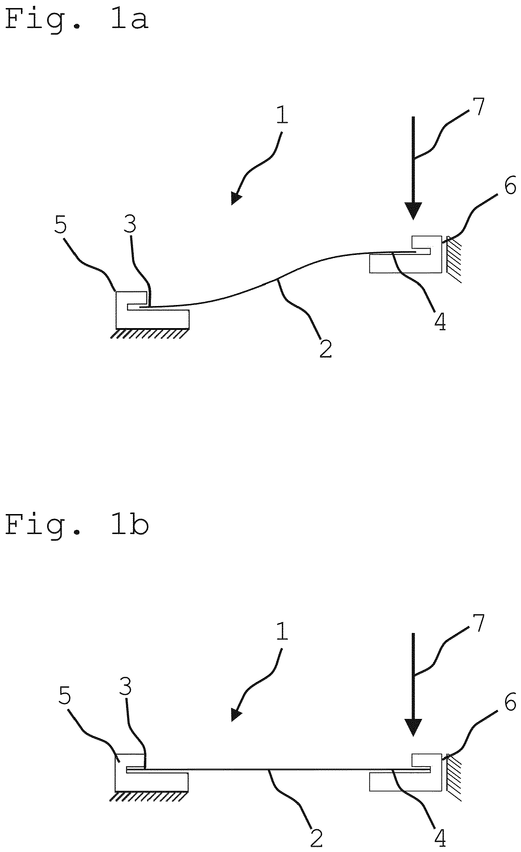

In Fig. 1a ist schematisch ein Blattfederelement 1 in einem unbelasteten Zustand das einen S-förmigen ersten Blattfederabschnitt 2 aufweist dargestellt. Ein erster Endbereich 3 und ein zweiter Endbereich 4 des ersten Blattfederabschnitts 2 sind jeweils momentenfest in einer ersten Lagervorrichtung 5 und einer zweiten Lagervorrichtung 6 gelagert. Eine Kraft kann über die Lagervorrichtung 6 in Richtung des Pfeils 7 auf das Blattfederelement 1 ausgeübt werden. In dieser Darstellung ist eine parallele Verschiebung des ersten Endbereichs 3 und des zweiten Endbereichs 4 in Krafteinleitungsrichtung (Pfeil 7) durch die in Krafteinleitungsrichtung verschiebbar gelagerte Lagervorrichtung 6 möglich. Eine relative Auslenkung der Endbereiche zueinander bei einer belastungsbedingten Ausdehnung bzw. Vergrößerung eines Abstands der Endbereiche wird durch die in eine Längsrichtung verschiebbare Lagerung der Endbereiche in der ersten Lagervorrichtung 5 und der zweiten Lagervorrichtung 6 ermöglicht.

Fig. 1b zeigt schematisch das in Fig. 1a dargestellte Blattfederelement 1 in einem eingefederten Zustand. Der im unbelasteten Zustand S-förmige erste Blattfederabschnitt 2 weist im belasteten Zustand eine ebene Form auf. Der erste Endbereich 3 und der zweite Endbereich 4 sind im Vergleich zu dem unbelasteten in Fig. 1a dargestellten Zustand parallel verschoben und relativ zueinander ausgelenkt worden und liegen im Wesentlichen in einer zu der durch den Pfeil 7 gekennzeichneten Krafteinleitungsrichtung orthogonalen Ebene.

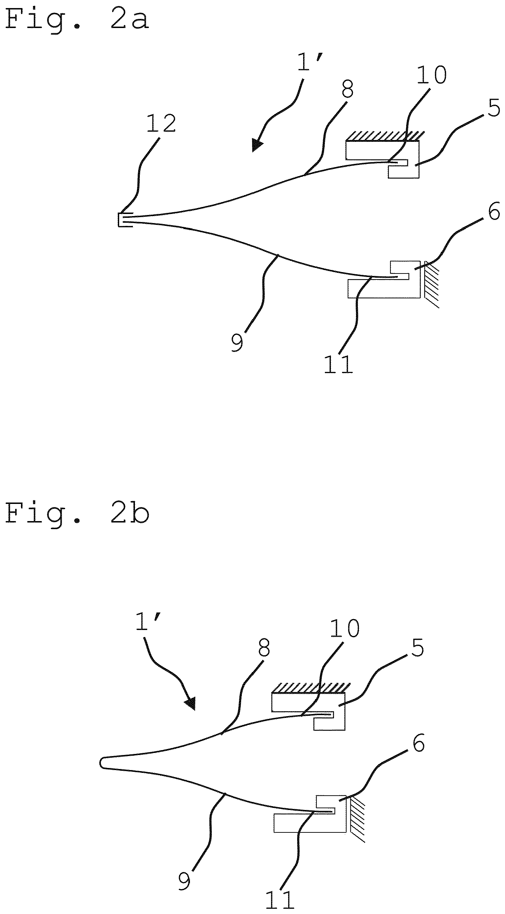

In Fig. 2a ist schematisch ein Blattfederelement 1' bestehend aus einem ersten Blattfederabschnitt 8 und einem zweiten Blattfederabschnitt 9 abgebildet. Ein erster Endbereich 10 des ersten Blattfederabschnitts 8 ist momentenfest in einer ersten Lagervorrichtung 5 gelagert. Ein zweiter Endbereich 11 des zweiten Blattfederabschnitts 9 ist ebenfalls momentenfest in einer zweiten Lagervorrichtung 6 gelagert. Die beiden zueinander benachbarten Endbereiche des ersten Blattfederabschnitts 8 und des zweiten Blattfederabschnitts 9 sind mit Hilfe einer Befestigungsvorrichtung 12 momentenfest verbunden.

Fig. 2b zeigt ein Blattfederelement 1', dass einen ersten Blattfederabschnitt 8 und einem zweiten Blattfederabschnitt 9 aufweist, wobei der erste Blattfederabschnitt 8 und der zweite Blattfederabschnitt 9 einstückig hergestellt sind.

In den Figuren 2a und 2b ist ebenfalls die zweite Lagervorrichtung 6 in Krafteinleitungsrichtung verschiebbar gelagert und ermöglicht dadurch eine parallele Verschiebung der jeweiligen gegenüberliegenden Endbereiche zueinander.

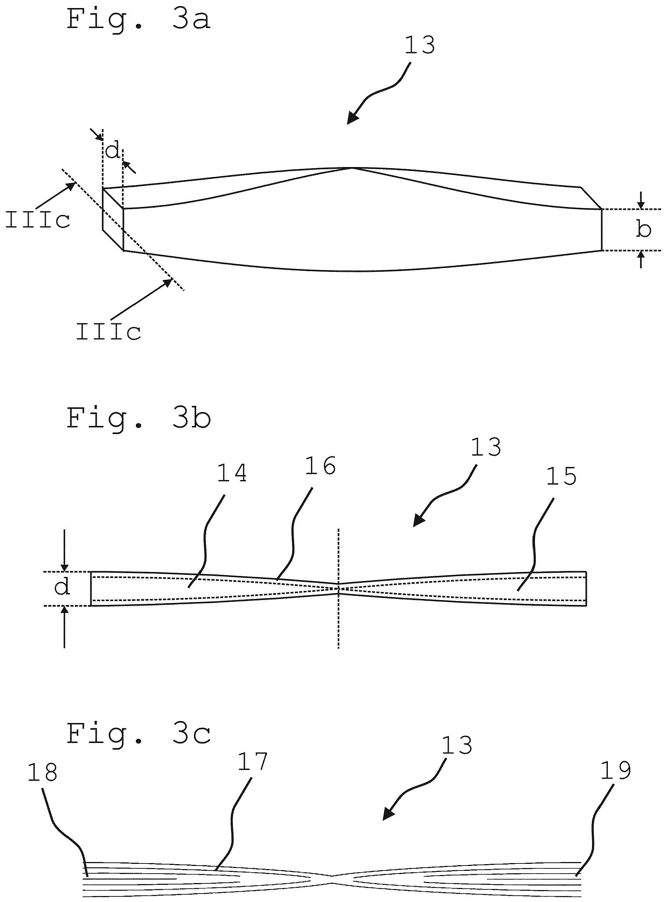

In Fig. 3a ist ein belasteter Blattfederabschnitt 13 schematisch dargestellt. Der Blattfederabschnitt 13 weist längs des Blattfederabschnitts 13 eine sich verändernde Dicke d und eine sich verändernde Breite b auf.

Fig. 3b zeigt schematisch eine Seitenansicht des in Fig. 3a dargestellten Blattfederabschnitts 13. Der einteilig hergestellte Blattfederabschnitt 13 weist einen ersten Blattfederteilabschnitt 14 und einen zweiten Blattfederteilabschnitt 15 auf. Die Dicke d des Blattfederteilabschnitts 14 und des Blattfederteilabschnitts 15 verändert sich längs des Blattfederabschnitts 13. Dabei weisen die strichpunktiert dargestellten Randschichten 16 der Blattfederteilabschnitte einen im Wesentlichen parabelförmigen Verlauf auf. Auf diese Weise wird erreicht, dass in den Randschichten 16 des Blattfederabschnitts 13 auftretende Zug-Druck-Spannungen im Wesentlichen konstant sind.

Fig. 3c zeigt schematisch einen Faserverlauf in einer Schnittebene entlang der in Fig. 3a dargestellten Linie IIIc-IIIc des aus einem Faserverbundwerkstoff hergestellten und in Fig. 3b dargestellten Blattfederabschnitts 13. Die Fasern 17 des Faserverbundwerkstoffs sind unidirektional angeordnet und verlaufen von einem Endbereich 18 zu einem dem Endbereich 18 gegenüberliegendem Endbereich 19. Da der Blattfederabschnitt 13 in einem mittleren Bereich eine geringere Dicke d aufweist als in den Endbereichen sind eine geringere Anzahl Fasern 17 in dem mittleren Bereich angeordnet. Die Fasern 17 verlaufen in diesem mittleren Bereich aus der dargestellten Schnittebene heraus. Die aus der Schnittebene laufenden Fasern 17 werden zur Ausgestaltung der in Fig. 3a dargestellten sich in dem mittleren Bereich vergrößernden Breite des Blattfederabschnitts 13 verwendet. Auf diese Weise wird die Herstellung der einzelnen Blattfederabschnitte 13 vereinfacht, da ein Blattfederabschnitt aus durchgehenden, unidirektional angeordneten Fasern aufgebaut wird.

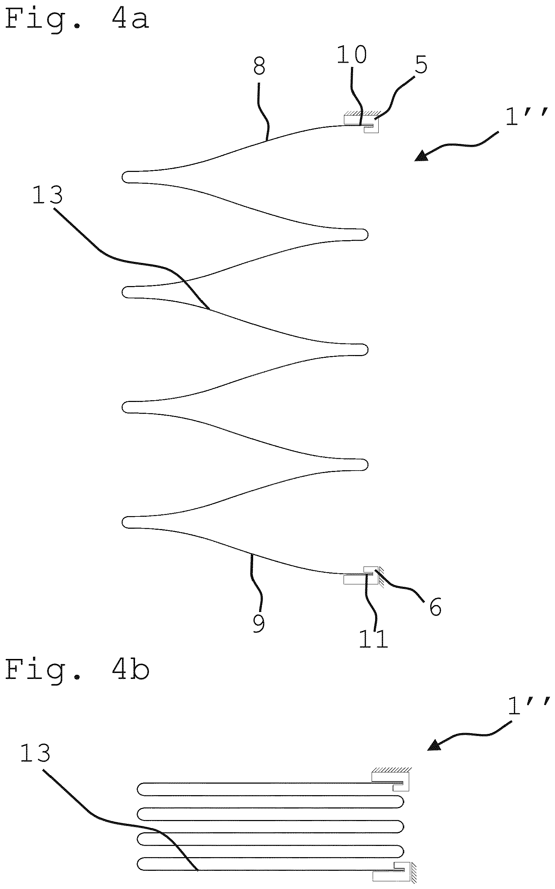

In Fig. 4a ist schematisch ein einteilig hergestelltes Blattfederelement 1'' bestehend aus acht S-förmigen Blattfederabschnitten 13 dargestellt. Der erste Endbereich 10 des ersten Blattfederabschnitts 8 ist mit der ersten Lagervorrichtung 5 verbunden. Der zweite Endbereich 11 des zweiten Blattfederabschnitts 9 ist momentenfest mit der zweiten Lagervorrichtung 6 verbunden. Der erste Blattfederabschnitt 8 und der zweite Blattfederabschnitt 9 stehen über die momentenfest verbundenen Blattfederabschnitte 13 miteinander in Wirkverbindung.

Fig. 4b zeigt schematisch das in Fig. 4a dargestellte Blattfederelement 1'' in einem eingefederten Zustand. Die in dem unbelasteten Zustand S-förmigen Blattfederabschnitte 13 weisen in dem in Fig. 4b dargestellten belasteten Zustand eine ebene Form auf.

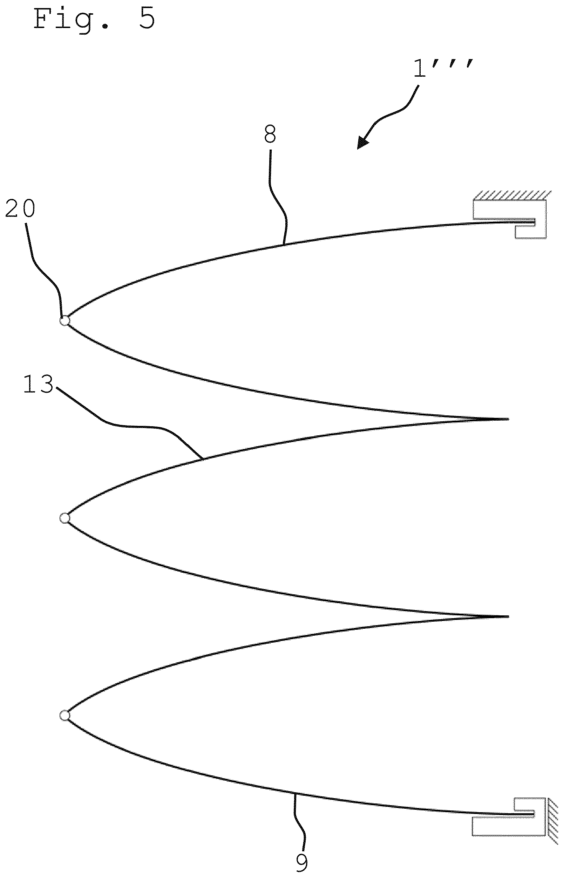

Fig. 5 zeigt schematisch ein Blattfederelement 1''' mit sechs über Gelenke 20 momentenfrei miteinander verbundenen Blattfederabschnitten 13. Der erste Blattfederabschnitt 8 und der zweite Blattfederabschnitt 9 stehen über die gelenkig verbundenen Blattfederabschnitte 13 miteinander in Wirkverbindung. Die einzelnen Blattfederabschnitte 13 weisen eine bogenförmige Form auf. Auf Grund der momentenfreien Lagerung und der bogenförmigen Form der Blattfederabschnitte 13 weisen die Blattfederabschnitte 13 in einem belasteten Zustand eine im Wesentlichen ebene Form auf. Durch die gelenkige Lagerung kann die Höhe des Blattfederelements 1''' in dem belasteten Zustand bei sonst gleichen Federeigenschaften im Vergleich zur momentenfesten Lagerung weiter reduziert werden.

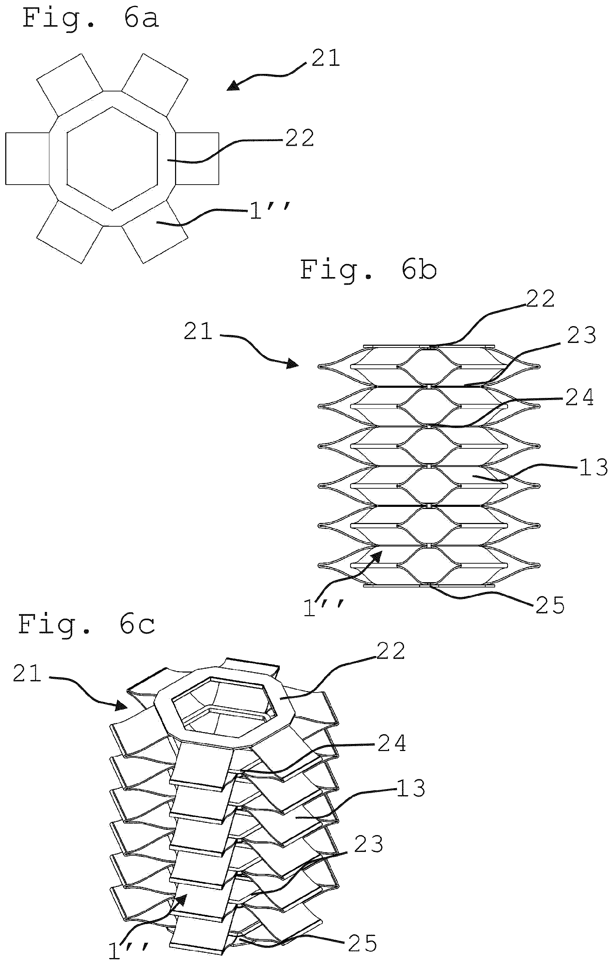

In Fig. 6a ist schematisch eine Aufsicht auf eine Blattfederanordnung 21 dargestellt. Die Blattfederanordnung 21 weist sechs konzentrisch angeordnete Blattfederelemente 1'' auf, die durch ein Krafteinleitungselement 22 miteinander verbunden sind.

Fig. 6b zeigt eine schematisch dargestellte Seitenansicht der in Fig. 6a dargestellten Blattfederanordnung 21. Die Blattfederelemente 1'' der Blattfederanordnung 21 weisen jeweils zwölf S-förmig ausgestaltete Blattfederabschnitte 13 auf. Innenliegende Endbereiche 23 benachbarter Blattfederabschnitte 13 benachbarter Blattfederelemente 1'' sind durch Stabilisierungsvorrichtungen 24 miteinander verbunden. Die Blattfederanordnung 21 weist ein Krafteinleitungselement 22 und eine Kraftaufnahmeeinrichtung 25 auf.

Fig. 6c zeigt eine schematische Ansicht der in Fig. 6a und Fig. 6b dargestellten Blattfederanordnung 21, bestehend aus sechs Blattfederelementen 1'' mit jeweils zwölf S-förmig ausgestalteten Blattfederabschnitten 13. Die Blattfederanordnung 21 weist ein Krafteinleitungselement 22 und eine Kraftaufnahmeeinrichtung 25 auf. Zudem sind jeweils fünf innenliegende Endbereiche 23 der Blattfederelemente 1'' durch jeweils eine Stabilisierungsvorrichtung 24 miteinander verbunden.

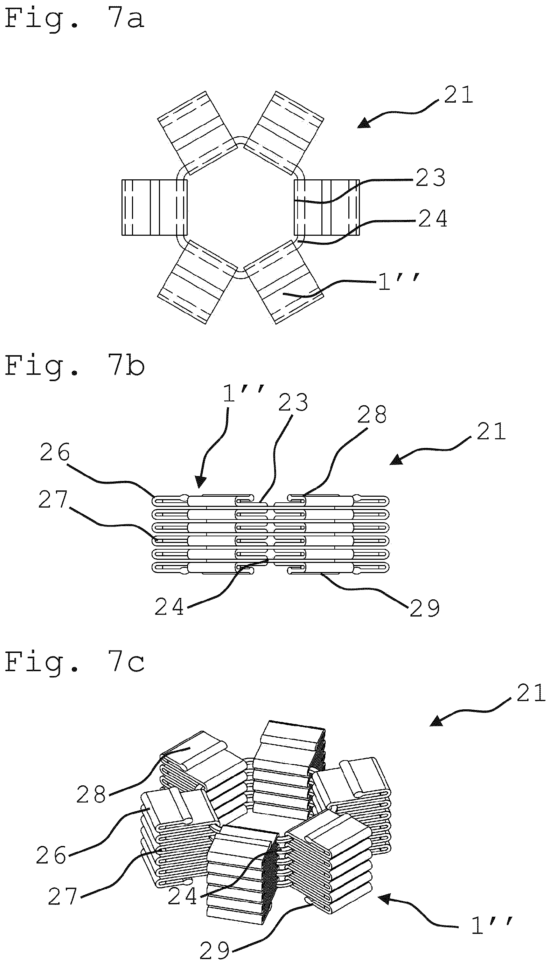

In Fig. 7a ist schematisch eine Aufsicht auf eine Blattfederanordnung 21 dargestellt. Die Blattfederanordnung 21 weist sechs konzentrisch angeordnete Blattfederelemente 1'' auf. Die Blattfederelemente 1'' sind an den innenliegenden Endbereichen 23 durch Stabilisierungsvorrichtungen 24 miteinander verbunden.

Fig. 7b zeigt eine schematische Ansicht der in Fig. 7a dargestellten Blattfederanordnung 21. Die Blattfederanordnung 21 ist in einem eingefederten Zustand dargestellt. In den bezüglich der Krafteinleitungsachse außenliegenden Endbereichen 26 sind Blattfederabschnittabstützeinrichtungen 27 zur Beeinflussung der Federkennlinie angeordnet. Die innenliegenden Endbereiche 23 werden durch Stabilisierungsvorrichtungen 24 miteinander verbunden. Dabei sind die Stabilisierungsvorrichtungen 24 in dem Bereich der innenliegenden Endbereiche 23 entsprechend der Blattfederabschnittabstützeinrichtungen 27 ausgestaltet, so dass die Stabilisierungsvorrichtungen 24 auch der Beeinflussung der Federkennlinie dienen. Bei diesem Ausführungsbeispiel wird eine Kraft durch die einzelnen Blattfederelemente 1'' über jeweils einen ersten verkürzten Endbereich 28 und einen zweiten verkürzten Endbereich 29 übertragen.

Fig. 7c zeigt eine schematische Ansicht der in den Figuren 7a und 7b dargestellten Blattfederanordnung 21. Die in einem eingefederten Zustand dargestellte Blattfederanordnung 21 weist sechs konzentrisch angeordnete Blattfederelemente 1'' auf, die durch fünf Stabilisierungsvorrichtungen 24 miteinander verbunden sind. Dabei dienen die Stabilisierungsvorrichtungen 24 gleichzeitig als Blattfederabschnittabstützeinrichtungen. In den außenliegenden Endbereichen 26 sind entsprechende Blattfederabschnittabstützeinrichtungen 27 angeordnet. Eine Kraft wird über jeweils einen ersten verkürzten Endbereich 28 und einen zweiten verkürzten Endbereich 29 in die einzelnen Blattfederelemente 1 eingeleitet.

## Patentansprüche

1. Blattfederanordnung mit einer ersten Lagervorrichtung, mit einer zweiten Lagervorrichtung und mit einem Blattfederelement (1, 1', 1'', 1''') mit mindestens einem Blattfederabschnitt (2, 13), wobei ein erster Endbereich (3) eines ersten Blattfederabschnitts (2) in einer ersten Lagervorrichtung (5) momentenfest gelagert ist und wobei ein dem ersten Endbereich (3) gegenüberliegender zweiter Endbereich (4) des ersten Blattfederabschnitts (2) oder ein zweiter Endbereich eines mit dem ersten Blattfederabschnitt in Wirkverbindung stehenden zweiten Blattfederabschnitts in einer zweiten Lagervorrichtung (6) momentenfest gelagert ist, wobei jeweils gegenüberliegende Endbereiche (3, 4, 18, 19) des mindestens einen Blattfederabschnitts (2, 13) in einem unbelasteten Zustand des Blattfederelements (1) parallel zueinander ausgerichtet sind und bei einer Krafteinleitung jeweils momentenfest gelagerte gegenüberliegende Endbereiche (3, 4, 18, 19) parallel verschiebbar und relativ zueinander auslenkbar sind, wobei die Richtung der Parallelverschiebung der Krafteinleitungsrichtung entspricht und die relative Auslenkung der Endbereiche (3, 4, 18, 19) durch eine Längenänderung des durch Krafteinwirkung elastisch verformten Blattfederabschnitts (2, 13) hervorgerufen wird und daher in Ausdehnungsrichtung des Blattfederabschnitts (2, 13) weist, und wobei die Endbereiche (3, 4, 18, 19) des mindestens einen Blattfederabschnitts (2, 13) durch die Einwirkung der Kraft auf das Blattfederelement (1) nicht elastisch verformbar sind und keinen nennenswerten Einfluss auf die Federwirkung des Blattfederabschnitts aufweisen und dass der mindestens eine Blattfederabschnitt (2, 13) zwischen den Endbereichen (3, 4, 18, 19) so ausgestaltet ist, dass sich dieser Bereich zwischen den gegenüberliegenden Endbereichen (3, 4, 18, 19) unter der Krafteinwirkung elastisch verformt, **dadurch gekennzeichnet, dass** eine relative Auslenkung der Endbereiche (3, 4, 18, 19) zueinander bei einer belastungsbedingten Ausdehnung bzw. Vergrößerung eines Abstands der Endbereiche (3, 4, 18, 19) durch eine in Längsrichtung verschiebbare Lagerung der Endbereiche (3, 4, 18, 19) in der ersten Lagervorrichtung (5) und in der zweiten Lagervorrichtung (6) ermöglicht wird.

2. Blattfederanordnung gemäß Anspruch 1, **dadurch gekennzeichnet, dass** der mindestens eine Blattfederabschnitt (2, 8, 9, 13) aus einem Faserverbundwerkstoff hergestellt ist und Fasern (17) des Faserverbundwerkstoffs im Wesentlichen unidirektional angeordnet sind

3. Blattfederanordnung gemäß Anspruch 1 oder Anspruch 2, **dadurch gekennzeichnet, dass** bei einem vorgebbaren Belastungsgrad des Blattfederelements (1, 1', 1'', 1''') die jeweiligen Endbereiche (3, 4, 10, 11, 18, 19) des mindestens einen Blattfederabschnitts (2, 8, 9, 13) im Wesentlichen in einer zu einer Krafteinleitungsrichtung orthogonalen Ebene liegen.

4. Blattfederanordnung (1, 1', 1'', 1''') gemäß einem der voranstehenden Ansprüche, **dadurch gekennzeichnet, dass** mindestens ein Blattfederabschnitt (2, 8, 9, 13) eine S-förmige Kontur aufweist.

5. Blattfederanordnung gemäß einem der voranstehenden Ansprüche, **dadurch gekennzeichnet, dass** mindestens ein Blattfederabschnitt (2, 8, 9, 13) in einem Bereich zwischen den beiden Endbereichen (3, 4, 10, 11, 18, 19) eine sich längs des Blattfederabschnitts (2, 8, 9, 13) verändernde Dicke aufweist und die Dicke des Blattfederabschnitts (2, 8, 9, 13) so an einen Schnittkraftverlauf angepasst ist, dass in Randschichten (16) des Blattfederabschnitts (2, 8, 9, 13) auftretende Zug-Druck-Spannungen im Wesentlichen konstant sind.

6. Blattfederanordnung gemäß einem der voranstehenden Ansprüche, **dadurch gekennzeichnet, dass** jeweils gegenüberliegende Randschichten (16) eines Blattfederteilabschnitts (14, 15) im Wesentlichen parabelförmig ausgestaltet sind.

7. Blattfederanordnung gemäß einem der voranstehenden Ansprüche, **dadurch gekennzeichnet, dass** mindestens ein Endbereich (3, 4, 10, 11, 18, 19) eine Blattfederabschnittabstützeinrichtung (27) zur Beeinflussung der Blattfederabschnittfederkennlinie aufweist.

8. Blattfederelement (1', 1'', 1''') mit mindestens zwei Blattfederabschnitten (8, 9, 13), wobei ein erster Endbereich (10) eines ersten Blattfederabschnitts (8) in einer ersten Lagervorrichtung (5) momentenfest gelagert ist und ein zweiter Endbereich (11) eines mit dem ersten Blattfederabschnitt (8) in Wirkverbindung stehenden zweiten Blattfederabschnitts (9) in einer zweiten Lagervorrichtung (6) momentenfest gelagert ist, wobei die Endbereiche eines jeden Blattfederabschnitts (8, 9, 13) durch die Einwirkung der Kraft auf das Blattfederelement (1', 1'', 1''') nicht elastisch verformbar sind und keinen nennenswerten Einfluss auf die Federwirkung des Blattfederabschnitts aufweisen und wobei jeder Blattfederabschnitt (8, 9, 13) zwischen den Endbereichen (10, 11, 18, 19) so ausgestaltet ist, dass sich dieser Bereich zwischen den gegenüberliegenden Endbereichen (10, 11, 18, 19) unter der Krafteinwirkung elastisch verformt, wobei sich die Endbereiche (10, 11, 18, 19) der einzelnen Blattfederabschnitte (8, 9, 13) jeweils in einer zu der Krafteinleitungsrichtung im Wesentlichen orthogonalen Ebene befinden, wobei jeweils momentenfest gelagerte gegenüberliegende Endbereiche (10, 11, 18, 19) der mindestens zwei Blattfederabschnitte (8, 9, 13) in einem unbelasteten Zustand des Blattfederelements (1', 1'', 1''') parallel zueinander ausgerichtet sind und bei einer Krafteinleitung parallel verschiebbar und relativ zueinander auslenkbar sind, wobei die Richtung der Parallelverschiebung der Krafteinleitungsrichtung entspricht und die relative Auslenkung der Endbereiche (10, 11, 18, 19) durch eine Längenänderung des durch Krafteinwirkung elastisch verformten Blattfederabschnitts (8, 9, 13) hervorgerufen wird und daher in Ausdehnungsrichtung des Blattfederabschnitts (8, 9, 13) weist, **dadurch gekennzeichnet, dass** die mindestens zwei Blattfederabschnitte (8, 9, 13) so ausgestaltet sind, dass sie sich bei einer maximalen Belastung des Blattfederelements (1', 1'', 1''') jeweils näherungsweise in eine Gerade beziehungsweise ebene Form verformen.

9. Blattfederelement (1, 1', 1'', 1''') gemäß Anspruch 8, **dadurch gekennzeichnet, dass** mindestens ein Blattfederabschnitt (2, 8, 9, 13) eine S-förmige Kontur aufweist.

10. Blattfederelement (1, 1', 1'', 1''') gemäß Anspruch 8 oder Anspruch 9, **dadurch gekennzeichnet, dass** einander zugeordnete Endbereiche zweier benachbarter Blattfederabschnitte (8, 9, 13) momentenfest verbunden sind.

11. Blattfederelement (1, 1', 1'', 1''') gemäß einem der voranstehenden Ansprüche 8 bis 10, **dadurch gekennzeichnet, dass** einander zugeordnete Endbereiche zweier benachbarter Blattfederabschnitte (8, 9, 13) in einer Befestigungvorrichtung (12) momentenfest festgelegt sind.

12. Blattfederelement (1, 1', 1'', 1''') gemäß einem der voranstehenden Ansprüche 8 bis 11, **dadurch gekennzeichnet, dass** ein Endbereich mindestens eines Blattfederabschnitts (8, 9, 13) gelenkig mit einem Endbereich eines benachbarten Blattfederabschnitts (8, 9, 13) verbunden ist und den gelenkig verbundenen Endbereichen gegenüberliegende Endbereiche jeweils mit einem weiteren Blattfederabschnitt (8, 9, 13) oder einer Lagervorrichtung (5, 6) momentenfest verbunden sind.

13. Blattfederelement (1, 1', 1'', 1''') gemäß einem der voranstehenden Ansprüche 8 bis 12, **dadurch gekennzeichnet, dass** das Blattfederelement (1, 1', 1'', 1''') einteilig ausgestaltet ist.

14. Blattfederelement (1, 1', 1'', 1''') gemäß einem der voranstehenden Ansprüche 8 bis 13, **dadurch gekennzeichnet, dass** mindestens ein Blattfederabschnitt (2, 8, 9, 13) in einem Bereich zwischen den beiden Endbereichen (3, 4, 10, 11, 18, 19) eine sich längs des Blattfederabschnitts (2, 8, 9, 13) verändernde Dicke aufweist und die Dicke des Blattfederabschnitts (2, 8, 9, 13) so an einen Schnittkraftverlauf angepasst ist, dass in Randschichten (16) des Blattfederabschnitts (2, 8, 9, 13) auftretende Zug-Druck-Spannungen im Wesentlichen konstant sind.

15. Blattfederelement (1, 1', 1'', 1''') gemäß einem der voranstehenden Ansprüche 8 bis 14, **dadurch gekennzeichnet, dass** jeweils gegenüberliegende Randschichten (16) eines Blattfederteilabschnitts (14, 15) im Wesentlichen parabelförmig ausgestaltet sind.

16. Blattfederelement (1, 1', 1'', 1''') gemäß einem der voranstehenden Ansprüche 8 bis 15, **dadurch gekennzeichnet, dass** mindestens ein Endbereich (3, 4, 10, 11, 18, 19) eine Blattfederabschnittabstützeinrichtung (27) zur Beeinflussung der Blattfederabschnittfederkennlinie aufweist.

17. Blattfederelement (1, 1', 1'', 1''') gemäß einem der voranstehenden Ansprüche 8 bis 16, **dadurch gekennzeichnet, dass** die mindestens zwei Blattfederabschnitte (2, 8, 9, 13) aus einem Faserverbundwerkstoff hergestellt sind und Fasern (17) des Faserverbundwerkstoffs im Wesentlichen unidirektional angeordnet sind.

18. Blattfederanordnung (21) mit mindestens zwei Blattfederelementen (1, 1', 1'', 1''') gemäß einem der voranstehenden Ansprüche 8 bis 17, **dadurch gekennzeichnet, dass** ein Krafteinleitungselement (22) mit jeweils der ersten Lagervorrichtung (5) der mindestens zwei Blattfederelemente (1, 1', 1", 1''') verbindbar ist und eine Kraftaufnahmeeinrichtung (25) mit jeweils der zweiten Lagervorrichtung (6) der mindestens zwei Blattfederelemente (1, 1', 1", 1''') verbindbar ist, so dass die Blattfederelemente (1, 1', 1'', 1''') im Wesentlichen konzentrisch um eine Krafteinleitungsachse angeordnet und in Richtung der Krafteinleitungsachse auslenkbar sind.

19. Blattfederanordnung (21) gemäß Anspruch 18, **dadurch gekennzeichnet, dass** mindestens ein Endbereich (23) eines ersten Blattfederelements (1, 1', 1'', 1''') mit einem Endbereich (23) eines zweiten Blattfederelements (1, 1', 1'', 1''') durch eine Stabilisierungsvorrichtung (24) verbindbar ist, wobei die verbindbaren Endbereiche (23) im Wesentlichen in einer bezüglich der Krafteinleitungsrichtung orthogonalen Ebene liegen.

20. Blattfederanordnung (21) gemäß Anspruch 18 oder Anspruch 19, **dadurch gekennzeichnet, dass** mindestens zwei Blattfederelemente (1, 1', 1'', 1''') unterschiedliche Federstärken aufweisen.

## Claims

1. Leaf spring assembly having a first bearing device, having a second bearing device, and having a leaf spring element (1, 1', 1", 1"') having at least one leaf spring portion (2, 13), wherein a first end region (3) of a first leaf spring portion (2) is mounted in a torque-proof manner in a first bearing device (5), and wherein a second end region (4), opposite the first end region (3), of the first leaf spring portion (2) or a second end region of a second leaf spring portion which is operatively connected to the first leaf spring portion is mounted in a torque-proof manner in a second bearing device (6), wherein opposite end regions (3, 4, 18, 19) of the at least one leaf spring portion (2, 13) are oriented parallel to one another in an unloaded state of the leaf spring element (1) and, when a force is applied, opposite end regions (3, 4, 18, 19) mounted in a torque-proof manner are displaceable in parallel and deflectable relative to one another, wherein the direction of the parallel displacement corresponds to the force application direction and the relative deflection of the end regions (3, 4, 18, 19) is brought about by a change in length of the leaf spring portion (2, 13) resiliently deformed by the action of force and therefore points in the direction of extension of the leaf spring portion (2, 13), and wherein the end regions (3, 4, 18, 19) of the at least one leaf spring portion (2, 13) are not resiliently deformable by the action of force on the leaf spring element (1) and do not have an appreciable influence on the spring effect of the leaf spring portion, and that the at least one leaf spring portion (2, 13) is formed between the end regions (3, 4, 18, 19) such that this region between the opposite end regions (3, 4, 18, 19) is resiliently deformed under the action of force, **characterised in that** a relative deflection of the end regions (3, 4, 18, 19) relative to one another in the case of a load-related extension or enlargement of a distance between the end regions (3, 4, 18, 19) is made possible by mounting the end regions (3, 4, 18, 19) in the first bearing device (5) and in the second bearing device (6) in such a manner that they are displaceable in the longitudinal direction.

2. Leaf spring assembly according to claim 1, **characterised in that** the at least one leaf spring portion (2, 8, 9, 13) is made of a fibre composite material, and fibres (17) of the fibre composite material are arranged substantially unidirectionally.

3. Leaf spring assembly according to claim 1 or claim 2, **characterised in that**, in the case of a specifiable degree of loading of the leaf spring element (1, 1', 1", 1"'), the respective end regions (3, 4, 10, 11, 18, 19) of the at least one leaf spring portion (2, 8, 9, 13) lie substantially in a plane orthogonal to a force application direction.

4. Leaf spring assembly (1, 1', 1", 1"') according to any one of the preceding claims, **characterised in that** at least one leaf spring portion (2, 8, 9, 13) has an S-shaped contour.

5. Leaf spring assembly according to any one of the preceding claims, **characterised in that** at least one leaf spring portion (2, 8, 9, 13) has in a region between the two end regions (3, 4, 10, 11, 18, 19) a thickness which changes along the leaf spring portion (2, 8, 9, 13), and the thickness of the leaf spring portion (2, 8, 9, 13) is so adapted to a cutting force profile that tension-compression stresses occurring in edge layers (16) of the leaf spring portion (2, 8, 9, 13) are substantially constant.

6. Leaf spring assembly according to any one of the preceding claims, **characterised in that** opposite edge layers (16) of a leaf spring sub-portion (14, 15) are substantially parabolic in shape.

7. Leaf spring assembly according to any one of the preceding claims, **characterised in that** at least one end region (3, 4, 10, 11, 18, 19) has a leaf spring portion support device (27) for influencing the leaf spring portion spring characteristic.

8. Leaf spring element (1', 1", 1"') having at least two leaf spring portions (8, 9, 13), wherein a first end region (10) of a first leaf spring portion (8) is mounted in a torque-proof manner in a first bearing device (5) and a second end region (11) of a second leaf spring portion (9), which is operatively connected to the first leaf spring portion (8), is mounted in a torque-proof manner in a second bearing device (6), wherein the end regions of each leaf spring portion (8, 9, 13) are not resiliently deformable by the action of force on the leaf spring element (1', 1", 1"') and do not have an appreciable influence on the spring effect of the leaf spring portion, and wherein each leaf spring portion (8, 9, 13) is so designed between the end regions (10, 11, 18, 19) that this region between the opposite end regions (10, 11, 18, 19) is resiliently deformed under the action of force, wherein the end regions (10, 11, 18, 19) of the individual leaf spring portions (8, 9, 13) are each located in a plane substantially orthogonal to the force application direction, wherein opposite end regions (10, 11, 18, 19), each mounted in a torque-proof manner, of the at least two leaf spring portions (8, 9, 13) are oriented parallel to one another in an unloaded state of the leaf spring element (1', 1", 1"') and, when a force is applied, are displaceable in parallel and deflectable relative to one another, wherein the direction of the parallel displacement corresponds to the force application direction and the relative deflection of the end regions (10, 11, 18, 19) is brought about by a change in length of the leaf spring portion (8, 9, 13) resiliently deformed under the action of force and therefore points in the direction of extension of the leaf spring portion (8, 9, 13), **characterised in that** the at least two leaf spring portions (8, 9, 13) are so designed that they are deformed approximately into a straight line, or a flat form, when the leaf spring element (1', 1", 1"') is subjected to a maximum load.

9. Leaf spring element (1, 1', 1", 1"') according to claim 8, **characterised in that** at least one leaf spring portion (2, 8, 9, 13) has an S-shaped contour.

10. Leaf spring element (1, 1', 1", 1"') according to claim 8 or claim 9, **characterised in that** mutually associated end regions of two adjacent leaf spring portions (8, 9, 13) are connected in a torque-proof manner.

11. Leaf spring element (1, 1', 1", 1"') according to any one of the preceding claims 8 to 10, **characterised in that** mutually associated end regions of two adjacent leaf spring portions (8, 9, 13) are fixed in a torque-proof manner in a fixing device (12).

12. Leaf spring element (1, 1', 1", 1"') according to any one of the preceding claims 8 to 11, **characterised in that** an end region of at least one leaf spring portion (8, 9, 13) is connected in an articulated manner with an end region of an adjacent leaf spring portion (8, 9, 13) and end regions opposite the end regions connected in an articulated manner are each connected in a torque-proof manner to a further leaf spring portion (8, 9, 13) or to a bearing device (5, 6).

13. Leaf spring element (1, 1', 1", 1"') according to any one of the preceding claims 8 to 12, **characterised in that** the leaf spring element (1, 1', 1", 1"') is in one-part form.

14. Leaf spring element (1, 1', 1", 1"') according to any one of the preceding claims 8 to 13, **characterised in that** at least one leaf spring portion (2, 8, 9, 13) has in a region between the two end regions (3, 4, 10, 11, 18, 19) a thickness which changes along the leaf spring portion (2, 8, 9, 13), and the thickness of the leaf spring portion (2, 8, 9, 13) is so adapted to a cutting force profile that tension-compression stresses occurring in edge layers (16) of the leaf spring portion (2, 8, 9, 13) are substantially constant.

15. Leaf spring element (1, 1', 1", 1"') according to any one of the preceding claims 8 to 14, **characterised in that** opposite edge layers (16) of a leaf spring sub-portion (14, 15) are substantially parabolic in shape.

16. Leaf spring element (1, 1', 1", 1"') according to any one of the preceding claims 8 to 15, **characterised in that** at least one end region (3, 4, 10, 11, 18, 19) has a leaf spring portion support device (27) for influencing the leaf spring portion spring characteristic.

17. Leaf spring element (1, 1', 1", 1"') according to any one of the preceding claims 8 to 16, **characterised in that** the at least two leaf spring portions (2, 8, 9, 13) are made of a fibre composite material, and fibres (17) of the fibre composite material are arranged substantially unidirectionally.

18. Leaf spring assembly (21) having at least two leaf spring elements (1, 1', 1", 1"') according to any one of the preceding claims 8 to 17, **characterised in that** a force application element (22) can be connected in each case to the first bearing device (5) of the at least two leaf spring elements (1, 1', 1", 1"'), and a force- absorbing device (25) can be connected in each case to the second bearing device (6) of the at least two leaf spring elements (1, 1', 1", 1"'), so that the leaf spring elements (1, 1', 1", 1"') are arranged substantially concentrically about a force application axis and are deflectable in the direction of the force application axis.

19. Leaf spring assembly (21) according to claim 18, **characterised in that** at least one end region (23) of a first leaf spring element (1, 1', 1", 1"') can be connected to an end region (23) of a second leaf spring element (1, 1', 1", 1"') by a stabilising device (24), wherein the connectable end regions (23) lie substantially in a plane orthogonal relative to the force application direction.

20. Leaf spring assembly (21) according to claim 18 or claim 19, **characterised in that** at least two leaf spring elements (1, 1', 1", 1"') have different spring strengths.

## Revendications

1. Agencement de ressort à lame comprenant un premier dispositif de support, un second dispositif de support et un élément de ressort à lame (1, 1', 1", 1'") doté d'au moins un segment de ressort à lame (2, 13), une première zone d'extrémité (3) d'un premier segment de ressort à lame (2) étant montée bloquée en couple dans un premier dispositif de support (5) et une seconde zone d'extrémité (4) opposée à la première zone d'extrémité (3) du premier segment de ressort à lame (2) ou une seconde zone d'extrémité d'un second segment de ressort à lame en liaison fonctionnelle avec le premier segment de ressort à lame étant montée bloquée en couple dans un second dispositif de support (6), des zones d'extrémité (3, 4, 18, 19) respectivement opposées de l'au moins un segment de ressort à lame (2, 13) étant orientées parallèlement l'une à l'autre dans un état non sollicité de l'élément de ressort à lame (1) et, lors de l'application d'une force, des zones d'extrémité (3, 4, 18, 19) opposées respectivement montées bloquées en couple étant déplaçables parallèlement et pouvant être décalées l'une par rapport à l'autre, la direction du déplacement parallèle correspondant à la direction de l'application de la force et le décalage relatif des zones d'extrémité (3, 4, 18, 19) étant provoqué par une modification de la longueur du segment de ressort à lame (2, 13) déformé élastiquement par l'action de la force et étant par conséquent dirigé dans la direction d'extension du segment de ressort à lame (2, 13), et les zones d'extrémité (3, 4, 18, 19) de l'au moins un segment de ressort à lame (2, 13) n'étant pas déformables élastiquement par l'action de la force sur l'élément de ressort à lame (1) et ne présentant pas d'influence notable sur l'effet de ressort du segment de ressort à lame et en ce que l'au moins un segment de ressort à lame (2, 13) entre les zones d'extrémité (3, 4, 18, 19) est conçu de telle sorte que cette zone entre les zones d'extrémité (3, 4, 18, 19) opposées se déforme élastiquement sous l'action de la force, **caractérisé en ce qu'**un décalage relatif des zones d'extrémité (3, 4, 18, 19) l'une par rapport à l'autre est rendu possible lors d'une extension ou d'un agrandissement, lié(e) à la sollicitation, d'une distance entre les zones d'extrémité (3, 4, 18, 19) par un support déplaçable dans la direction de la longueur des zones d'extrémité (3, 4, 18, 19) dans le premier dispositif de support (5) et le second dispositif de support (6).

2. Agencement de ressort à lame selon la revendication 1, **caractérisé en ce que** l'au moins un segment de ressort à lame (2, 8, 9, 13) est fabriqué en un matériau composite renforcé par des fibres et des fibres (17) du matériau composite renforcé par des fibres sont disposées sensiblement de manière unidirectionnelle.

3. Agencement de ressort à lame selon la revendication 1 ou la revendication 2, **caractérisé en ce que**, lors d'un degré de sollicitation prédéfinissable de l'élément de ressort à lame (1, 1', 1", 1'"), les zones d'extrémité (3, 4, 10, 11, 18, 19) respectives de l'au moins un segment de ressort à lame (2, 8, 9, 13) se trouvent sensiblement dans un plan perpendiculaire à une direction d'application de la force.

4. Agencement de ressort à lame (1, 1', 1", 1'") selon l'une des revendications précédentes, **caractérisé en ce qu'**au moins un segment de ressort à lame (2, 8, 9, 13) présente un contour en forme de S.

5. Agencement de ressort à lame selon l'une des revendications précédentes, **caractérisé en ce qu'**au moins un segment de ressort à lame (2, 8, 9, 13) présente, dans une zone située entre les deux zones d'extrémité (3, 4, 10, 11, 18, 19), une épaisseur se modifiant le long du segment de ressort à lame (2, 8, 9, 13) et l'épaisseur du segment de ressort à lame (2, 8, 9, 13) est adaptée à une variation de la force de coupe de telle manière que des contraintes de traction et compression se produisant dans des couches superficielles (16) du segment de ressort à lame (2, 8, 9, 13) sont sensiblement constantes.

6. Agencement de ressort à lame selon l'une des revendications précédentes, **caractérisé en ce que** des couches superficielles (16) respectivement opposées d'un tronçon de ressort à lame (14, 15) sont conçues sensiblement en forme de parabole.

7. Agencement de ressort à lame selon l'une des revendications précédentes, **caractérisé en ce qu'**au moins une zone d'extrémité (3, 4, 10, 11, 18, 19) comporte un moyen d'appui de segment de ressort à lame (27) pour influencer la courbe caractéristique de ressort du segment de ressort à lame.

8. Élément de ressort à lame (1', 1", 1'") comprenant au moins deux segments de ressort à lame (8, 9, 13), une première zone d'extrémité (10) d'un premier segment de ressort à lame (8) étant montée bloquée en couple dans un premier dispositif de support (5) et une seconde zone d'extrémité (11) d'un second segment de ressort à lame (9) en liaison fonctionnelle avec le premier segment de ressort à lame (8) étant montée bloquée en couple dans un second dispositif de support (6), les zones d'extrémité de chaque segment de ressort à lame (8, 9, 13) n'étant pas déformables élastiquement par l'action de la force sur l'élément de ressort à lame (1', 1", 1"') et ne présentant pas d'influence notable sur l'effet de ressort du segment de ressort à lame et chaque segment de ressort à lame (8, 9, 13) entre les zones d'extrémité (10, 11, 18, 19) étant conçu de telle manière que cette zone entre les zones d'extrémité (10, 11, 18, 19) opposées se déforme élastiquement sous l'action de la force, les zones d'extrémité (10, 11, 18, 19) des différents segments de ressort à lame (8, 9, 13) se trouvant respectivement dans un plan sensiblement perpendiculaire à la direction d'application de la force, des zones d'extrémité (10, 11, 18, 19) opposées montées respectivement bloquées en couple des au moins deux segments de ressort à lame (8, 9, 13) étant orientées, dans un état sollicité de l'élément de ressort à lame (1', 1", 1'"), parallèlement l'une à l'autre et pouvant, lors de l'application d'une force, être déplacées parallèlement et être décalées l'une par rapport à l'autre, la direction du déplacement parallèle correspondant à la direction d'application de la force et le décalage relatif des zones d'extrémité (10, 11, 18, 19) étant provoqué par une modification de la longueur du segment de ressort à lame (8, 9, 13) déformé élastiquement par l'action de la force et étant par conséquent dirigé dans la direction d'extension du segment de ressort à lame (8, 9, 13), **caractérisé en ce que** les au moins deux segments de ressort à lame (8, 9, 13) sont conçus de telle manière qu'ils se déforment, lors d'une sollicitation maximale de l'élément de ressort à lame (1', 1", 1'"), respectivement approximativement en une forme droite ou plane.

9. Élément de ressort à lame (1, 1', 1", 1'") selon la revendication 8, **caractérisé en ce qu'**au moins un segment de ressort à lame (2, 8, 9, 13) présente un contour en forme de S.

10. Élément de ressort à lame (1, 1', 1", 1"') selon la revendication 8 ou la revendication 9, **caractérisé en ce que** des zones d'extrémité associées entre elles de deux segments de ressort à lame (8, 9, 13) adjacents sont reliées de manière bloquée en couple.

11. Élément de ressort à lame (1, 1', 1", 1"') selon l'une des revendications précédentes 8 à 10, **caractérisé en ce que** des zones d'extrémité associées entre elles de deux segments de ressort à lame (8, 9, 13) adjacents sont fixées de manière bloquée en couple dans un dispositif de fixation (12).

12. Élément de ressort à lame (1, 1', 1", 1"') selon l'une des revendications précédentes 8 à 11, **caractérisé en ce qu'**une zone d'extrémité d'au moins un segment de ressort à lame (8, 9, 13) est reliée de manière articulée à une zone d'extrémité d'un segment de ressort à lame (8, 9, 13) adjacent et des zones d'extrémité opposées aux zones d'extrémité reliées de manière articulée sont respectivement reliées à un autre segment de ressort à lame (8, 9, 13) ou à un dispositif de support (5, 6).

13. Élément de ressort à lame (1, 1', 1", 1"') selon l'une des revendications précédentes 8 à 12, **caractérisé en ce que** l'élément de ressort à lame (1, 1', 1", 1'") est conçu d'un seul tenant.

14. Élément de ressort à lame (1, 1', 1", 1"') selon l'une des revendications précédentes 8 à 13, **caractérisé en ce qu'**au moins un segment de ressort à lame (2, 8, 9, 13) présente, dans une zone située entre les deux zones d'extrémité (3, 4, 10, 11, 18, 19), une épaisseur se modifiant le long du segment de ressort à lame (2, 8, 9, 13) et l'épaisseur du segment de ressort à lame (2, 8, 13) est adaptée à une variation de la force de coupe de telle manière que des contraintes de traction et compression se produisant dans des couches superficielles (16) du segment de ressort à lame (2, 8, 9, 13) sont sensiblement constantes.

15. Élément de ressort à lame (1, 1', 1", 1"') selon l'une des revendications précédentes 8 à 14, **caractérisé en ce que** des couches superficielles (16) respectivement opposées d'un tronçon de ressort à lame (14, 15) sont conçues sensiblement en forme de parabole.

16. Élément de ressort à lame (1, 1', 1", 1"') selon l'une des revendications précédentes 8 à 15, **caractérisé en ce qu'**au moins une zone d'extrémité (3, 4, 11, 18, 19) comporte un moyen d'appui de segment de ressort à lame (27) pour influencer la courbe caractéristique de ressort du segment de ressort à lame.

17. Élément de ressort à lame (1, 1', 1", 1"') selon l'une des revendications précédentes 8 à 16, **caractérisé en ce que** les au moins deux segments de ressort à lame (2, 8, 9, 13) sont fabriqués en un matériau composite renforcé par des fibres et des fibres (17) du matériau composite renforcé par des fibres sont disposées sensiblement de manière unidirectionnelle.

18. Agencement de ressort à lame (21) comprenant au moins deux éléments de ressort à lame (1, 1', 1", 1'") selon l'une des revendications précédentes 8 à 17, **caractérisé en ce qu'**un élément d'application de force (22) peut être relié respectivement au premier dispositif de support (5) des au moins deux éléments de ressort à lame (1, 1', 1", 1'") et un moyen de réception de force (25) peut être relié respectivement au second dispositif de support (6) des au moins deux éléments de ressort à lame (1, 1', 1", 1'"), de sorte que les éléments de ressort à lame (1, 1', 1", 1'") sont disposés sensiblement de manière concentrique autour d'un axe d'application de force et peuvent être décalés en direction de l'axe d'application de la force.

19. Agencement de ressort à lame (21) selon la revendication 18, **caractérisé en ce qu'**au moins une zone d'extrémité (23) d'un premier élément de ressort à lame (1, 1', 1", 1'") peut être reliée à une zone d'extrémité (23) d'un second élément de ressort à lame (1, 1', 1", 1'") par un dispositif de stabilisation (24), les zones d'extrémité (23) pouvant être reliées se trouvant sensiblement dans un plan perpendiculaire par rapport à la direction d'application de la force.

20. Agencement de ressort à lame (21) selon la revendication 18 ou la revendication 19, **caractérisé en ce qu'**au moins deux éléments de ressort à lame (1, 1', 1", 1'") présentent différentes puissances de ressort.
